# FASCICULE DE BREVET EUROPEEN

(11) **EP 3 732 762 B1**
(45) Date de publication et mention de la délivrance du brevet: **18.05.2022**
(21) Numéro de dépôt: 18842447.7
(22) Date de dépôt: 24.12.2018
(51) Int. Cl.: H02J 7/00

(54) **BATTERIE D'ACCUMULATEURS ELECTRIQUES**
BATTERIEPACK
BATTERY PACK

(30) Priorité: 27.12.2017 FR 1763250
(43) Date de publication de la demande: 04.11.2020
(73) Titulaire: Commissariat à l'Energie Atomique et aux Energies Alternatives, 75015 Paris (FR)
(72) Inventeur: FERNANDEZ, Eric, 38760 SAINT PAUL DE VARCES (FR); BACQUET, Sylvain, 38470 CHASSELAY (FR); CASSARINO, Leandro, 33400 TALENCE (FR); DESPESSE, Ghislain, 38340 VOREPPE (FR); LOPEZ, Yan, 38140 RENAGE (FR); THOMAS, Remy, 38130 ECHIROLLES (FR)
(74) Mandataire: Cabinet Beaumont
(86) Numéro de dépôt international: PCT/FR2018/053542
(87) Numéro de publication internationale: WO 2019/129990

(56) Documents cités:
- WO-A2-2012/030455
- FR-A1- 2 947 112
- GB-A- 2 537 616

## Description

### Domaine

La présente invention concerne une batterie d'accumulateurs électriques, également appelée pack batterie.

### Exposé de l'art antérieur

Il existe de réaliser une batterie comprenant plusieurs étages ou modules dans chacun desquels des accumulateurs, également appelés cellules, peuvent être connectés en série ou en parallèle par des interrupteurs commandables. Une telle batterie est adaptée à fournir une tension dont la forme d'onde varie dans le temps en faisant varier au cours du temps la connexion des cellules via la fermeture ou l'ouverture des interrupteurs.

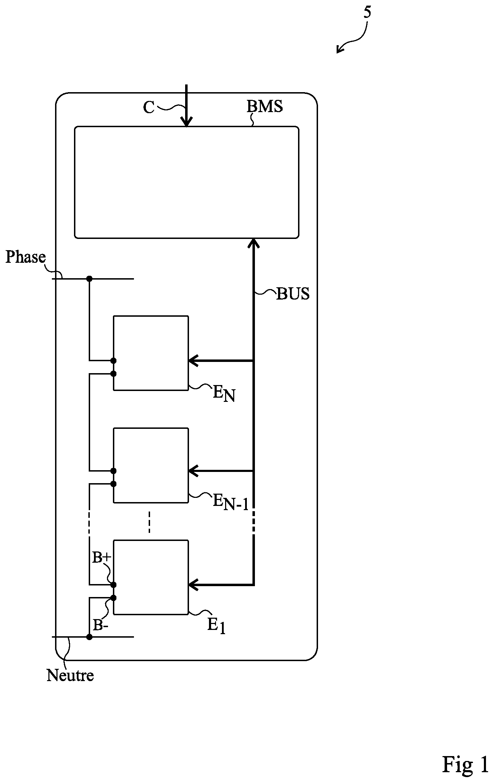

La figure 1 représente un exemple d'une telle batterie 5. La batterie 5 comprend N modules E₁ à E_{N}. Le nombre N est un nombre entier pouvant être compris entre 1 et 50. Chaque module comprend une borne positive B+ et une borne négative B- et plusieurs cellules, non représentées, pouvant être connectées entre elles en série et/ou en parallèle par l'intermédiaire d'interrupteurs, non représentés, entre les bornes B+ et B-. Les modules E₁ à E_{N} peuvent être connectés en série entre une première borne Neutre de la batterie 5 et une deuxième borne Phase de la batterie 5. Un exemple d'une telle batterie est décrit dans la demande de brevet WO 2012/117110. Un autre exemple est GB2537616.

La batterie 5 comprend un circuit BMS de commande des modules E₁ à E_{N}, appelé circuit de commande maître par la suite. Le circuit de commande maître BMS peut échanger des données avec chaque module E₁ à E_{N} par l'intermédiaire d'un bus bidirectionnel BUS de transmission de données. Chaque module E₁ à E_{N} comprend un circuit de commande, non représenté, des interrupteurs du module, appelé circuit de commande esclave par la suite, à partir de commandes fournies par le circuit de commande maître BMS. Chaque module comprend, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave de chaque module E₁ à E_{N} est adapté à transmettre au circuit de commande maître BMS des données représentatives des mesures de tensions, de courants et/ou de températures par le bus de transmission de données Bus.

Le circuit de commande maître BMS est adapté à recevoir une consigne C, par exemple une consigne de tension et/ou de courant et/ou de connexion d'un nombre donné d'accumulateurs électriques entre les bornes Phase et Neutre, et à sélectionner les cellules à connecter ou à déconnecter pour chaque module de façon à obtenir la tension et/ou le courant souhaités entre les bornes Phase et Neutre de la batterie 5. Le circuit de commande maître BMS fournit alors des commandes aux modules par l'intermédiaire du bus de transmission de données BUS à partir desquelles le circuit de commande esclave de chaque module connecte ou déconnecte les cellules selon la configuration souhaitée.

Il est souhaitable que la sélection des cellules à connecter/déconnecter soit réalisée en assurant que chaque cellule fonctionne dans sa plage de fonctionnement optimale en fonction des mesures de tensions, de courants et de température fournies par les modules. En particulier, il est souhaitable que le circuit de commande maître BMS réalise un équilibrage des cellules, c'est-à-dire que la sélection des cellules soit réalisée de façon que les écarts entre les états de charge des cellules soient en permanence les plus faibles possibles. Il est en outre souhaitable que la sélection des cellules tienne compte d'une éventuelle défaillance d'une cellule de façon, par exemple, à exclure cette cellule de la sélection.

Pour effectuer la fonction d'équilibrage, le circuit de commande maître BMS peut déterminer un classement des cellules selon un niveau de priorité, les cellules les plus prioritaires du classement étant celles qui devraient être sélectionnées les premières. Le classement de priorités, également appelé table de priorités, est susceptible d'évoluer au cours du fonctionnement de la batterie, notamment suite à l'évolution des états de charges des cellules ou suite à la défaillance d'une cellule.

Le circuit de commande maître BMS peut tenir compte du classement de priorités lors de la détermination des commandes de connexion/déconnexion des cellules et en particulier tenir compte de l'évolution du classement de priorités dans le temps. A titre de variante, le circuit de commande maître peut transmettre aux circuits de commande esclaves des données représentatives de la table de priorités et ce sont les circuits de commande esclaves qui, à partir des commandes fournies par le circuit de commande maître, déterminent les cellules à sélectionner en tenant compte de la table de priorités.

Pour certaines applications, la consigne reçue par le circuit de commande maître BMS peut varier rapidement de sorte qu'il peut être difficile de prendre en compte une modification du classement de priorités sans perturber la transmission des commandes du circuit de commande maître BMS aux circuits de commande esclaves pour suivre la consigne. En outre, il peut alors être difficile d'assurer la transmission de données autres que les commandes entre les circuits de commande esclaves et le circuit de commande maître BMS sans perturber la transmission des commandes du circuit de commande maître BMS aux circuits de commande esclaves pour suivre la consigne.

### Résumé

Ainsi, l'invention a pour but de prévoir une batterie qui pallie au moins certains des inconvénients des batteries décrites précédemment.

Ainsi, l'invention prévoit une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques et des interrupteurs reliant les accumulateurs entre eux et aux troisième et quatrième bornes du module et un deuxième circuit de commande des interrupteurs, la batterie comprenant en outre un premier bus de transmission de données reliant le premier circuit de commande à chaque deuxième circuit de commande et un deuxième bus de transmission de données reliant le premier circuit de commande à chaque deuxième circuit de commande. Le premier circuit de commande est adapté à transmettre des premières données aux deuxièmes circuits de commande par le premier bus à un premier débit et est adapté à transmettre des deuxièmes données aux deuxièmes circuits de commande par le deuxième bus à un deuxième débit inférieur au premier débit.

Selon un mode de réalisation, le premier circuit de commande est adapté à transmettre les premières données aux deuxièmes circuits de commande par le premier bus au premier débit qui varie de 5 mégabits par seconde à 7 mégabits par seconde.

Selon un mode de réalisation, le premier circuit de commande est adapté à transmettre les deuxièmes données aux deuxièmes circuits de commande par le deuxième bus au deuxième débit qui varie de 0,5 mégabit par seconde à 1 mégabit par seconde.

Selon un mode de réalisation, le premier bus est unidirectionnel.

Selon un mode de réalisation, le deuxième bus est bidirectionnel.

Selon un mode de réalisation, chaque deuxième circuit de commande est adapté à transmettre des troisièmes données au premier circuit de commande par le deuxième bus.

Selon un mode de réalisation, chaque module comprend au moins un capteur relié au deuxième circuit de commande.

Un mode de réalisation prévoit l'utilisation d'une batterie telle que définie précédemment, dans laquelle le premier circuit de commande reçoit une consigne de fourniture d'une tension et/ou d'un courant et/ou de connexion d'un nombre donné d'accumulateurs électriques entre les première et deuxième bornes et détermine les premières données à partir de la consigne, le deuxième circuit de commande de chaque module recevant les premières données et commandant la fermeture ou l'ouverture des interrupteurs du module à partir des premières données.

Selon un mode de réalisation, le premier circuit de commande détermine une table de priorité de connexion des accumulateurs électriques des modules, les deuxièmes données transmises étant représentative de la table de priorité.

Selon un mode de réalisation, la table de priorité de connexions est déterminée par le premier circuit de commande à partir des troisièmes données.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente, de façon partielle et schématique, un exemple d'une batterie d'accumulateurs ;
la figure 2 représente, de façon partielle et schématique, un mode de réalisation d'une batterie d'accumulateurs ; et
la figure 3 représente, de façon partielle et schématique, un exemple de module de la batterie de la figure 1.

### Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les fonctions classiques réalisées par un circuit de commande maître d'une batterie d'accumulateurs telles que l'équilibrage des cellules sont bien connues de l'homme du métier et ne sont pas décrites plus en détail par la suite. Dans la suite de la description, les expressions "sensiblement", "environ", "approximativement" et "de l'ordre de" signifient "à 10 % près", de préférence à 5 % près.

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

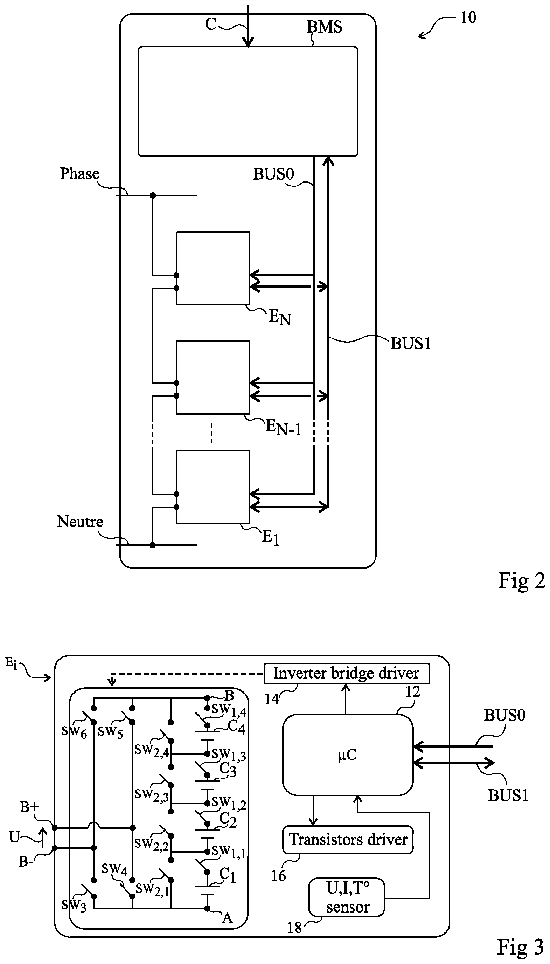

La figure 2 représente un mode de réalisation d'une batterie 10. La batterie 10 comprend l'ensemble des éléments de la batterie 5 représentée en figure 1 à la différence que le bus BUS est remplacé par deux bus BUSO et BUS1 qui relient chacun le circuit de commande maître BMS à chaque module E₁ à E_{N}.

Le bus BUS0 est un bus rapide, c'est-à-dire un bus sur lequel des données sont transmises avec un débit supérieur à 3 mégabits par seconde, de préférence compris entre 5 mégabits par seconde et 7 mégabits par seconde. Le bus BUS0 peut être un bus unidirectionnel. A titre d'exemple, le bus BUS0 est un bus selon la norme RS485.

Le bus BUS1 est un bus lent, c'est-à-dire sur lequel des données sont transmises avec un débit inférieur à 3 mégabits par seconde, de préférence compris entre 0,5 mégabit par seconde et 1 mégabit par seconde. Le bus BUS1 est un bus bidirectionnel. A titre d'exemple, le bus BUS1 est un bus de données CAN, notamment selon la norme ISO 11898.

Le bus rapide BUSO est utilisé pour la transmission de commandes fournies par le circuit de commande maître BMS pour suivre la consigne C et éventuellement pour suivre une modification du classement de priorité. Selon un mode de réalisation, les commandes correspondent à des ordres de connexion/déconnexion des cellules de chaque module E₁ à E_{N}. Selon un autre mode de réalisation, les commandes correspondent à un nombre de cellules à connecter.

Le bus lent BUS1 est utilisé pour l'échange de toutes les autres données entre le circuit de commande maître BMS et chaque module E₁ à E_{N}.

Le circuit de commande maître BMS peut correspondre à un circuit dédié ou peut comprendre un processeur, par exemple un microprocesseur ou un microcontrôleur, adapté à exécuter des instructions d'un programme d'ordinateur stocké dans une mémoire.

La figure 3 représente un mode de réalisation du module Eᵢ, où i varie de 1 à N, chaque module E₁ à E_{N} pouvant avoir une structure analogue.

Selon le présent mode de réalisation, le module Eᵢ est adapté à fournir une tension U entre la borne positive B+ et la borne négative B-. Le module Eᵢ comprend des cellules C₁ à C_{M} où M est un nombre entier compris entre 2 et 10, de préférence entre 2 et 5, quatre cellules C₁, C₂, C₃ et C₄ étant représentées à titre d'exemple en figure 3. Les cellules C₁ à C_{M} sont reliées entre elles et aux bornes B+ et B- par des interrupteurs. Dans le présent mode de réalisation, pour chaque cellule Cₖ, k étant un nombre entier variant de 1 à M, le module Eᵢ comprend un premier interrupteur SW_{1,k} en série avec la cellule Cₖ et un deuxième interrupteur SW_{2,k} en parallèle de l'ensemble comprenant la cellule Cₖ et l'interrupteur SW_{1,k}. Les M ensembles comprenant la cellule Cₖ et le premier interrupteur SW_{1,k} sont disposés en série entre un noeud A et un noeud B. La commande des interrupteurs SW_{1,k} et SW_{2,k}, k variant de 1 à M, permet de mettre en série entre les noeuds A et B, 1 à M cellules parmi les M cellules C₁ à C_{M}. Dans le présent mode de réalisation, le module Eᵢ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur SW₃ reliant le noeud A à la borne B+, un interrupteur SW₄ reliant le noeud A à la borne B-, un interrupteur SW₅ reliant le noeud B à la borne B+ et un interrupteur SW₆ reliant le noeud B à la borne B-. A titre d'exemple chaque interrupteur SW_{1,k} et SW_{2,k}, k variant de 1 à M, SW₃, SW₄, SW₅ et SW₆ peut correspondre à un transistor à effet de champ à grille isolée, également appelé transistor MOS, notamment un transistor MOS de puissance, par exemple un transistor MOS à canal N.

Chaque module Eᵢ comprend, en outre, le circuit de commande esclave 12 (µC) adapté à échanger et à recevoir des données émises par le circuit de commande maître BMS sur le bus BUS0 et à échanger des données avec le circuit de commande maître BMS sur le bus BUS1. Le circuit de commande esclave 12 peut correspondre à un circuit dédié ou peut comprendre un processeur, par exemple un microprocesseur ou un microcontrôleur, adapté à exécuter des instructions d'un programme d'ordinateur stocké dans une mémoire.

Chaque module Eᵢ comprend, en outre, un circuit de pilotage 14 (Inverter bridge driver) relié aux interrupteurs SW₃, SW₄, SW₅ et SW₆ du pont inverseur et un circuit de pilotage 16 (Transistors driver) relié aux interrupteurs SW_{1,k} et SW_{2,k}, k variant de 1 à M. Chaque circuit de pilotage 14, 16 est adapté à convertir les signaux de commande fournis par le circuit de commande esclave 12 en signaux adaptés à la commande des interrupteurs.

Chaque module Eᵢ comprend, en outre, des capteurs 18 (U, I, T° sensor) reliés au circuit de commande esclave 12. Le module Eᵢ peut comprendre, pour chaque cellule Cₖ, un capteur de température adapté à mesurer la température de la cellule Cₖ. Le module Eᵢ peut en outre comprendre, pour chaque cellule Cₖ, un capteur de tension adapté à mesurer la tension aux bornes de la cellule Cₖ. Le module Eᵢ peut en outre comprendre, pour chaque cellule Cₖ, un capteur de courant adapté à mesurer le courant fourni par la cellule Cₖ. Le circuit de commande esclave 12 de chaque module Eᵢ est adapté à transmettre des troisièmes données au circuit de commande maître BMS sur le bus lent BUS1 représentatives des mesures réalisées par les capteurs 18 du module Eᵢ. Le nombre et le type de capteurs dépend notamment de l'agencement des cellules du module Eᵢ. Dans l'agencement de cellules représenté en figure 3, un seul capteur du courant circulant au noeud A ou au noeud B peut être prévu.

Dans le mode de réalisation illustré en figure 3, un ordre de connexion d'une cellule Cₖ d'un module Eᵢ signifie que la cellule Cₖ doit être connectée en série entre les noeuds A et B du module Eᵢ, ce qui est obtenu en fermant l'interrupteur SW_{1,k} et en ouvrant l'interrupteur SW_{2,k}, et un ordre de déconnexion d'une cellule Cₖ d'un module Eᵢ signifie que la cellule Cₖ ne doit pas être connectée en série entre les noeuds A et B du module Eᵢ, ce qui est obtenu en ouvrant l'interrupteur SW_{1,k} et en fermant l'interrupteur SW_{2,k}. Toutefois, pour un agencement différent des cellules Cₖ du module Eᵢ dans lequel les cellules Cₖ peuvent être agencées en série ou en parallèle entre elles entre les noeuds A et B, un ordre de connexion d'une cellule Cₖ doit en outre préciser dans quelle configuration, série ou parallèle, la cellule Cₖ se trouve par rapport aux autres cellules du module Eᵢ.

Le circuit de commande maître BMS est adapté à déterminer la table de priorités des cellules. La table de priorités peut être stockée dans une mémoire du circuit de commande maître BMS sous la forme d'une liste chaînée ou d'un tableau. Selon un mode de réalisation, certaines des commandes transmises par le circuit de commande maître BMS aux circuits de commande esclaves 12 des modules Eᵢ sur le bus rapide BUS0 peuvent être représentatives d'ordres de connexion/déconnexion de cellules des modules Eᵢ pour satisfaire la table de priorités. Selon un autre mode de réalisation, des données transmises par le circuit de commande maître BMS aux circuits de commande esclaves 12 sur le bus lent BUS1 peuvent être représentatives de la table de priorité ou d'une partie de celle-ci.

La transmission des commandes sur le bus rapide BUS0 par le circuit de commande maître BMS vers le circuit de commande esclave 12 de chaque module Eᵢ, i variant de 1 à N, peut être réalisée selon différents procédés de transmission. Le procédé de transmission des commandes mis en oeuvre sur le bus rapide BUS0 peut être différent du procédé de transmission des données mis en oeuvre sur le bus lent BUS1.

Selon un mode de réalisation, les commandes transmises par le circuit de commande maître BMS aux circuits de commande esclaves 12 des modules Eᵢ sont représentatives d'ordres de connexion/déconnexion des cellules Cₖ des modules Eᵢ. Selon un mode de réalisation, les commandes fournies sont représentatives d'ordres de connexion/déconnexion des cellules Cₖ des modules Eᵢ pour suivre la consigne C. Selon un mode de réalisation, lorsque le circuit de commande maître BMS détermine ces commandes, il peut ne pas tenir compte de la table de priorité. Dans ce cas, des commandes supplémentaires peuvent être transmises par le circuit de commande maître BMS aux circuits de commande esclaves 12 des modules Eᵢ correspondant à des ordres de connexion/déconnexion des cellules Cₖ des modules Eᵢ pour tenir compte de la table de priorités. Les circuits de commande esclaves 12 traitent alors de façon prioritaire les commandes pour suivre la consigne et traitent de façon non prioritaire les commandes supplémentaires pour suivre la table de priorité. Selon un autre mode de réalisation, lorsque le circuit de commande maître BMS détermine les commandes pour suivre la consigne C, il peut tenir compte au moins d'une partie de la table de priorité, notamment de la partie de la table de priorité concernant les cellules à connecter.

Selon un mode de réalisation du procédé de transmission de données sur le bus BUS0 ou BUS1, une commande transmise par le circuit de commande maître BMS est adressée au circuit de commande esclave 12 d'un seul module Eᵢ. Le circuit de commande esclave 12 de chaque module Eᵢ est alors adapté à déterminer si la commande qu'il reçoit lui est destiné. Si cela est le cas, le circuit de commande esclave 12 commande les circuits de pilotage 14 et 16 pour appliquer les ordres de connexion/déconnexion demandés par le circuit de commande maître BMS. A titre d'exemple, les commandes sont transmises sous la forme de trames, chaque trame comprenant un entête contenant l'adresse du module Eᵢ désigné suivi d'octets relatifs à la commandes des interrupteurs, et éventuellement suivis d'au moins un octet de contrôle. Un avantage d'un tel mode de réalisation est que la réactivité de la batterie 5 à réception d'une nouvelle consigne C est optimale. En outre, les commutations des interrupteurs des modules Eᵢ sont étalées dans le temps de sorte que la génération de perturbations électromagnétiques est réduite. En outre, un contrôle d'erreur de trame efficace peut être mis en oeuvre.

Selon un autre mode de réalisation du procédé de transmission de données, chaque trame transmise par le circuit de commande maître BMS contient l'ensemble des ordres de connexion/déconnexion pour toutes les cellules Cₖ de tous les modules Eᵢ. Le circuit de commande esclave 12 de chaque module Eᵢ est donc sollicité à chaque trame envoyée par le circuit de commande maître BMS. Le circuit de commande esclave 12 de chaque module Eᵢ est adapté à analyser la trame en extraire les ordres de connexion/déconnexion des interrupteurs appartenant au module Eᵢ.

Selon un procédé de transmission de données, les commandes transmises par le circuit de commande maître BMS sur le bus rapide BUS0 ne sont pas représentatives d'ordres de connexion/déconnexion des cellules Cₖ des modules Eᵢ mais sont représentatives du nombre total de cellules en série souhaité entre les bornes Phase et Neutre de la batterie 10. Le circuit de commande esclave 12 de chaque module Eᵢ est donc sollicité à chaque trame envoyée. Le circuit de commande maître BMS détermine la table de priorités des cellules et la transmet de façon régulière aux circuits de commande esclaves 12 des modules Eᵢ par le bus lent BUS1. En particulier, une mise à jour de la table de priorités peut être transmise par le circuit de commande maître BMS aux circuits de commande esclaves 12 à chaque modification de la table de priorités déterminée par le circuit de commande maître BMS. Des données représentatives de la table de priorités peuvent alors être transmises sur le bus lent BUS1. Le circuit de commande esclave 12 de chaque module Eᵢ a mémorisé la table de priorités d'utilisation des cellules du module Eᵢ par rapport aux autres cellules de la batterie 10. Le circuit de commande esclave 12 de chaque module Eᵢ est adapté à comparer le nombre de cellules demandées par le circuit de commande maître BMS avec la priorité des cellules qui composent le module Eᵢ. Un avantage d'un tel mode de réalisation est que la réactivité de la batterie 5 à réception d'une nouvelle consigne C est optimale.

Des modes de réalisation particuliers de la présente invention ont été décrits. Diverses variantes et modifications apparaîtront à l'homme de l'art. Bien que la figure 3 représente un mode de réalisation d'agencement des cellules et des interrupteurs d'un module Eᵢ, il est clair que la structure de chaque module Eᵢ peut être différente. En particulier, la structure de chaque module Eᵢ peut correspondre à l'une des structures décrites dans la demande de brevet WO 2012/117110.

## Revendications

1. Système électrique (10) comprenant un premier circuit de commande de batterie (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄) et des interrupteurs reliant les cellules entre elles et aux troisième et quatrième bornes du module et un deuxième circuit de commande (12) des interrupteurs, **caractérisé en ce qu'**il comprend en outre un premier bus de transmission de données (BUS0) reliant le premier circuit de commande à chaque deuxième circuit de commande et un deuxième bus de transmission de données (BUS1) reliant le premier circuit de commande à chaque deuxième circuit de commande, dans lequel le premier circuit de commande est adapté à transmettre des premières données aux deuxièmes circuits de commande par le premier bus à un premier débit et est adapté à transmettre des deuxièmes données aux deuxièmes circuits de commande par le deuxième bus à un deuxième débit inférieur au premier débit.

2. Système électrique selon la revendication 1, dans lequel le premier circuit de commande (BMS) est adapté à transmettre les premières données aux deuxièmes circuits de commande (12) par le premier bus (BUS0) au premier débit qui varie de 5 mégabits par seconde à 7 mégabits par seconde.

3. Système électrique selon la revendication 1 ou 2, dans lequel le premier circuit de commande (BMS) est adapté à transmettre les deuxièmes données aux deuxièmes circuits de commande (12) par le deuxième bus (BUS1) au deuxième débit qui varie de 0,5 mégabit par seconde à 1 mégabit par seconde.

4. Système électrique selon l'une quelconque des revendications 1 à 3, dans lequel le premier bus (BUS0) est unidirectionnel.

5. Système électrique selon l'une quelconque des revendications 1 à 4, dans lequel le deuxième bus (BUS1) est bidirectionnel.

6. Système électrique selon l'une quelconque des revendications 1 à 5, dans lequel chaque deuxième circuit de commande (12) est adapté à transmettre des troisièmes données au premier circuit de commande (BMS) par le deuxième bus (BUS1).

7. Système électrique selon l'une quelconque des revendications 1 à 6, dans lequel chaque module (Eᵢ) comprend au moins un capteur (18) relié au deuxième circuit de commande (12).

8. Utilisation d'un système électrique selon l'une quelconque des revendications 1 à 7, dans laquelle le premier circuit de commande (BMS) reçoit une consigne (C) de fourniture d'une tension et/ou d'un courant et/ou de connexion d'un nombre donné de cellules électriques (C₁, C₂, C₃, C₄) entre les première et deuxième bornes (Phase, Neutre) et détermine les premières données à partir de la consigne, le deuxième circuit de commande (12) de chaque module (Eᵢ) recevant les premières données et commandant la fermeture ou l'ouverture des interrupteurs du module à partir des premières données.

9. Utilisation selon la revendication 8, dans laquelle le premier circuit de commande (BMS) détermine une table de priorité de connexion des cellules électriques (C₁, C₂, C₃, C₄) des modules (Eᵢ), les deuxièmes données transmises étant représentative de la table de priorité.

10. Utilisation selon la revendication 9, dans laquelle le système électrique (10) est selon la revendication 6, dans laquelle la table de priorité de connexions est déterminée par le premier circuit de commande (12) à partir des troisièmes données.

## Patentansprüche

1. Ein elektrisches System (10), das eine erste Steuerschaltung (BMS) und eine Vielzahl von Modulen (Eᵢ) aufweist, die in Reihe zwischen einem ersten und einem zweiten Anschluss (Phase, Neutre) angeordnet sind, wobei jedes Modul (Eᵢ) einen dritten und einen vierten Anschluss (B+, B-) aufweist, wobei mindestens einer der dritten und vierten Anschlüsse jedes Moduls mit einem der dritten und vierten Anschlüsse eines anderen Moduls gekoppelt ist, wobei jedes Modul elektrische Zellen (C₁, C₂, C₃, C₄) und Schalter aufweist, die die Zellen untereinander und mit dem dritten und vierten Anschluss des Moduls koppeln, sowie eine zweite Schaltung (12) zum Steuern der Schalter, **dadurch gekennzeichnet, dass** es ferner einen ersten Datenübertragungsbus (BUS0), der die erste Steuerschaltung mit jeder zweiten Steuerschaltung koppelt, und einen zweiten Datenübertragungsbus (BUS1), der die erste Steuerschaltung mit jeder zweiten Steuerschaltung koppelt, aufweist, wobei die erste Steuerschaltung in der Lage ist, erste Daten über den ersten Bus mit einer ersten Rate an die zweiten Steuerschaltungen zu übertragen, und in der Lage ist, zweite Daten über den zweiten Bus mit einer zweiten Rate, die kleiner als die erste Rate ist, an die zweiten Steuerschaltungen zu übertragen.

2. Elektrisches System nach Anspruch 1, wobei der erste Steuerkreis (BMS) in der Lage ist, die ersten Daten an die zweiten Steuerkreise (12) über den ersten Bus (BUS0) mit der ersten Rate zu übertragen, die zwischen 5 Megabit pro Sekunde und 7 Megabit pro Sekunde liegt.

3. Elektrisches System nach Anspruch 1 oder 2, wobei der erste Steuerkreis (BMS) in der Lage ist, die zweiten Daten an die zweiten Steuerkreise (12) über den zweiten Bus (BUS1) mit der zweiten Rate zu übertragen, die zwischen 0,5 Megabit pro Sekunde und 1 Megabit pro Sekunde variiert.

4. Elektrisches System nach einem der Ansprüche 1 bis 3, wobei der erste Bus (BUS0) unidirektional ist.

5. Elektrisches System nach einem der Ansprüche 1 bis 4, wobei der zweite Bus (BUS1) bidirektional ist.

6. Elektrisches System nach einem der Ansprüche 1 bis 5, wobei jede zweite Steuerschaltung (12) in der Lage ist, dritte Daten über den zweiten Bus (BUS1) an die erste Steuerschaltung (BMS) zu übertragen.

7. Elektrisches System nach einem der Ansprüche 1 bis 6, wobei jedes Modul (Eᵢ) mindestens einen Sensor (18) aufweist, der mit dem zweiten Steuerkreis (12) gekoppelt ist.

8. Eine Verwendung des elektrischen Systems nach einem der Ansprüche 1 bis 7, wobei die erste Steuerschaltung (BMS) einen Sollwert (C) für die Abgabe einer Spannung und/oder eines Stroms und/oder für die Verbindung einer gegebenen Anzahl elektrischer Zellen (C₁, C₂, C₃, C₄) zwischen dem ersten und dem zweiten Anschluss (Phase, Neutre) empfängt und die ersten Daten auf der Grundlage des Sollwerts bestimmt, wobei die zweite Steuerschaltung (12) jedes Moduls (Eᵢ) die ersten Daten empfängt und das Einschalten oder Ausschalten der Schalter des Moduls auf der Grundlage der ersten Daten steuert.

9. Verwendung nach Anspruch 8, bei der der erste Steuerkreis (BMS) eine Prioritäts-Tabelle für die Verbindung der elektrischen Zellen (C₁, C₂, C₃, C₄) der Module (Eᵢ) bestimmt, wobei die zweiten übertragenen Daten repräsentativ für die Prioritäts-Tabelle sind.

10. Verwendung nach Anspruch 9, wobei das elektrische System (10) nach Anspruch 6 ist, wobei die Anschlussprioritätstabelle von dem ersten Steuerkreis (12) auf der Grundlage der dritten Daten bestimmt wird.

## Claims

1. An electric system (10) comprising a first control circuit (BMS) and a plurality of modules (Eᵢ) arranged in series between first and second terminals (Phase, Neutre), each module (Eᵢ) comprising third and fourth terminals (B+, B-), at least one of the third and fourth terminals of each module being coupled to one of the third and fourth terminals of another module, each module comprising electric cells (C₁, C₂, C₃, C₄) and switches coupling the cells together and to the third and fourth terminals of the module and a second circuit (12) for controlling the switches, **characterized in that** it further comprises a first data transmission bus (BUS0) coupling the first control circuit to each second control circuit and a second data transmission bus (BUS1) coupling the first control circuit to each second control circuit, wherein the first control circuit is capable of transmitting first data to the second control circuits over the first bus at a first rate and is capable of transmitting second data to the second control circuits over the second bus at a second rate smaller than the first rate.

2. The electric system according to claim 1, wherein the first control circuit (BMS) is capable of transmitting the first data to the second control circuits (12) over the first bus (BUS0) at the first rate, which varies from 5 megabits per second to 7 megabits per second.

3. The electric system according to claim 1 or 2, wherein the first control circuit (BMS) is capable of transmitting the second data to the second control circuits (12) over the second bus (BUS1) at the second rate, which varies from 0.5 megabit per second to 1 megabit per second.

4. The electric system according to any of claims 1 to 3, wherein the first bus (BUS0) is unidirectional.

5. The electric system according to any of claims 1 to 4, wherein the second bus (BUS1) is bidirectional.

6. The electric system according to any of claims 1 to 5, wherein each second control circuit (12) is capable of transmitting third data to the first control circuit (BMS) over the second bus (BUS1).

7. The electric system according to any of claims 1 to 6, wherein each module (Eᵢ) comprises at least one sensor (18) coupled to the second control circuit (12).

8. A use of the electric system according to any of claims 1 to 7, wherein the first control circuit (BMS) receives a set point value (C) for the delivery of a voltage and/or of a current and/or for the connection of a given number of electric cells (C₁, C₂, C₃, C₄) between the first and second terminals (Phase, Neutre) and determines the first data based on the set point value, the second control circuit (12) of each module (Eᵢ) receiving the first data and controlling the turning on or the turning off of the switches of the module based on the first data

9. The use according to claim 8, wherein the first control circuit (BMS) determines a table of priority of connection of the electric cells (C₁, C₂, C₃, C₄) of the modules (Eᵢ), the second transmitted data being representative of the priority table.

10. The use according to claim 9, wherein the electric system (10) is according to claim 6, wherein the connection priority table is determined by the first control circuit (12) based on the third data.
